# EUROPÄISCHE PATENTSCHRIFT

(11) **EP 1 104 738 B1**
(45) Veröffentlichungstag und Bekanntmachung des Hinweises auf die Patenterteilung: **17.01.2007**
(21) Anmeldenummer: 00124012.6
(22) Anmeldetag: 04.11.2000
(51) Int. Cl.: B62K 25/24, B62K 25/16

(54) **Führung für das Vorderrad eines Motorrades**
Guide for the front wheel of a motorcycle
Guide pour la roue avant d'une motocyclette

(30) Priorität: 02.12.1999 DE 19957964
(43) Veröffentlichungstag der Anmeldung: 06.06.2001
(60) Teilanmeldung: 06010646.5
(73) Patentinhaber: Bayerische Motoren Werke Aktiengesellschaft, 80809 München (DE)
(72) Erfinder: Vilsmeier, Gerd, 84079 Bruckberg (DE)

(56) Entgegenhaltungen:
- DE-A- 3 110 288
- DE-A- 3 833 880
- DE-U- 9 404 889
- DE-U- 29 620 003
- FR-A- 580 298

## Beschreibung

Die Erfindung betrifft eine Führung für das Vorderrad eines Motorrades gemäß dem Oberbegriff des Anspruchs 1.

Bei einer in der DE 31 10 288 A1 offenbarten Vorderradführung dieser Bauart sind die oberen und die unteren Lenker unter einem spitzen Winkel zu den Holmen der Gabel angeordnet, und das Federbein stützt sich über einen an der Gabel schwenkbar gelagerten Kipphebel und eine mit diesem gelenkig verbundene Stange an jedem der unteren Lenker ab. Da das Federbein im Abstand vor der Lenkdrehachse angeordnet ist, bewirkt es ein großes Trägheitsmoment, das die Lenkbewegungen behindert.

Der Erfindung liegt die Aufgabe zugrunde, eine gattungsgemäße Vorderradführung zu schaffen, die konstruktiv einfach aufgebaut ist und ein optimales Fahrverhalten ermöglicht.

Erfindungsgemäß wird diese Aufgabe durch die Merkmale des kennzeichnenden Teils des Anspruchs 1 gelöst.

Diese Bauweise ist nicht nur konstruktiv einfach, sondern sie führt auch zu einem sehr geringen Trägheitsmoment des Federbeins in bezug auf die Lenkdrehachse. Den Lenkbewegungen wirken daher nur geringe Trägheitskräfte entgegen. Die Anordnung des Federbeins im Lenkkopf ist einerseits platzsparend, und andererseits führt sie zu mehr Freiheit für das Design. Die erfindungsgemäße Vorderradführung ermöglicht eine nahezu beliebige Einstellung des sogenannten Bremsnickausgleichs. Die Vorderradführung kann beispielsweise so ausgelegt sein, daß beim Bremsen mit der Vorderradbremse zunächst ein leichtes Einfedem erfolgt, daß aber dann die Bremskraft wegen der veränderten Stellung der Lenker kein weiteres Einfedern mehr bewirkt. Der Umstand, daß beim Abbremsen des Vorderrades nur eine sehr geringe Einfederbewegung erfolgt, macht die erfindungsgemäße Vorderradführung auch zum Einsatz eines Antiblockiersystems geeignet.

Um die ungefederten Massen möglichst gering zu halten, ist gemäß einer Weiterbildung der Erfindung vorgesehen, daß das die Feder- und Dämpfungselemente enthaltende Gehäuse des Federbeins am Lenkkopf angebracht ist, und daß die Stange des Federbeins mit dem oberen Lenker gelenkig verbunden ist.

Im Hinblick auf ein möglichst feines Ansprechverhalten der Vorderradführung ist vorgesehen, daß die den Achsen der beiden Viergelenke zugeordneten Lager als Wälzlager ausgebildet sind.

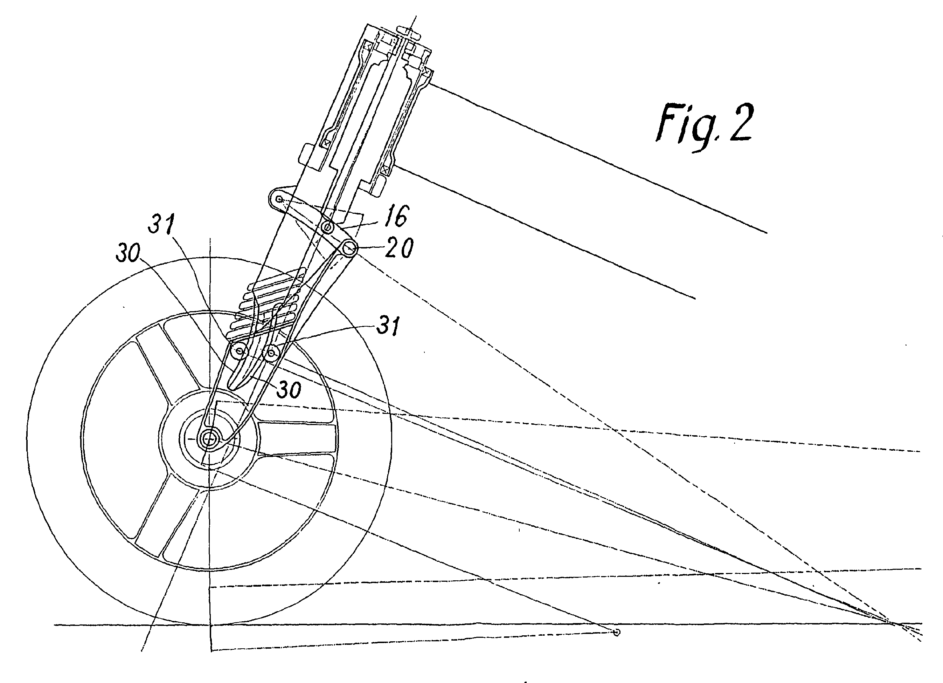

Eine abgewandelte Ausführungsform, die allerdings nicht Teil der Erfindung ist, geht von einer Führung aus, wie sie in Figur 2 dargestellt ist. Zur Erzielung eines optimalen Fahrverhaltens bei einem konstruktiv einfachen Aufbau ist dabei vorgesehen, daß in den beiden Gabelholmen oder in den beiden Lenkern Führungen ausgebildet sind, in denen an den Lenkern oder an den Gabelholmen befestigte Gleitstücke geführt sind.

Zur Erzielung eines guten Ansprechverhaltens der Vorderradführung sind die Gleitstücke vorzugsweise als Wälzlager ausgebildet.

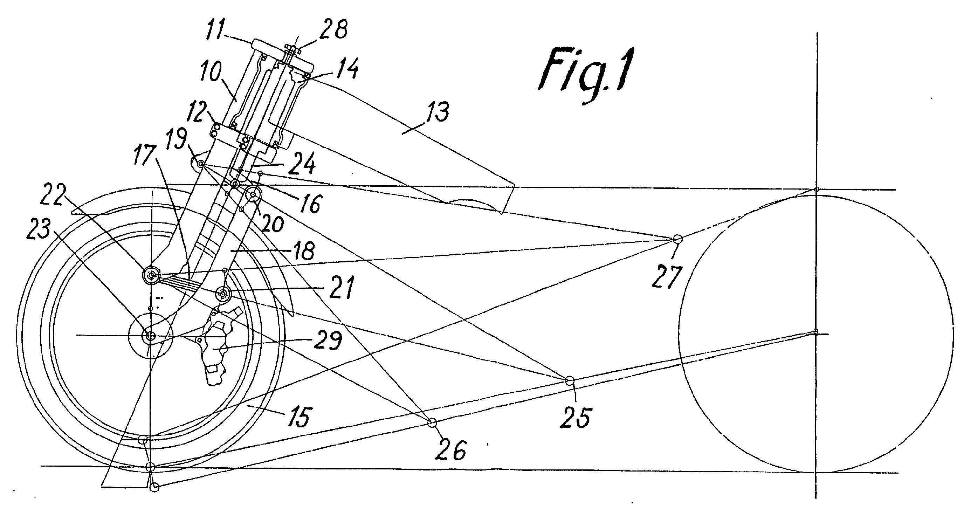

Ein Ausführungsbeispiel der Erfindung ist in der Figur 1 dargestellt und wird nachfolgend näher erläutert. Es zeigt:
Fig. 1 eine schematische Seitenansicht der Führung für das Vorderrad eines Motorrades, und
Fig. 2 in größerem Maßstab eine andere, nicht erfindungsgemäße, Ausführungsform einer Vorderradführung.

In Fig. 1 der Zeichnung ist die Führung für das Vorderrad 15 eines Motorrades gezeigt. Das Hinterrad des Motorrades ist nur durch einen Kreis angedeutet. Die Führung umfaßt eine Gabel mit zwei Holmen 10, die durch eine obere und eine untere Gabelbrücke 11 und 12 mit einander verbunden sind. Am Vorderrahmen 13 des Motorrades ist ein Lenkkopf 14 befestigt, mit dem die obere und die untere Gabelbrücke 11 und 12 drehbar verbunden sind. Die obere Gabelbrücke 11 dient zur Befestigung einer (nicht gezeigten) Lenkstange. Mit den beiden Gabelholmen 10 sind ein oberer Lenker 16 und zwei untere Lenker 17 schwenkbar verbunden. Zwei Koppeln 18 sind mit dem hinteren Ende des oberen bzw. des zugeordneten unteren Lenkers 16, 17 schwenkbar verbunden. Die beiden Holme 10, der obere Lenker 16, die beiden unteren Lenker 17 und die beiden Koppeln 18 bilden somit zwei Viergelenke mit horizontalen Achsen 19, 20, 21, 22. Die den Achsen 19, 20, 21 und 22 zugeordneten Gelenke sind mit Wälzlagern versehen. Die beiden Koppeln 18 sind als Radträger ausgebildet und nehmen in ihren nach unten verlängerten Enden eine Steckachse 23 oder dergleichen zur Lagerung des Vorderrades 15 auf. An mindestens einer der beiden Koppeln 18 ist ein Bremssattel 29 befestigt. Das Gehäuse eines Federbeins ist im Lenkkopf 14 mit Gummilagern gelagert. Die Stange 24 des Federbeins ist über ein Gelenk mit dem oberen Lenker 16 verbunden. Die Anordnung ist dabei so getroffen, daß die Längsachse des Federbeins bzw. der Stange 24 mit der Lenkdrehachse zusammenfällt.

In der Zeichnung ist die Vorderradführung in der Normallage gezeigt, in der die oberen und unteren Lenker 16 und 17 zu den Gabelholmen 10 näherungsweise rechtwinklig angeordnet sind. Der Schnittpunkt der Verlängerungen der oberen und unteren Lenker 16 und 17 wird als Pol bezeichnet. In der Zeichnung ist der Pol, welcher der Normallage entspricht, mit dem Bezugszeichen 25 bezeichnet, während der Pol im ausgefederten Zustand mit dem Bezugszeichen 26 und der Pol im eingefederten Zustand mit dem Bezugszeichen 27 bezeichnet ist. Es ist erkennbar, daß der Pol beim Einfedern nach oben wandert. Die Geometrie der beiden Viergelenke ist so gewählt, daß beim Bremsen mit der Vorderradbremse die Bremskraft ein Einfedem des Vorderrades 15 bewirkt, so daß der Pol vom Punkt 25 zum Punkt 27 schräg nach oben wandert. Bei dieser Lageveränderung des Pols nimmt die auf das Federelement des Federbeins einwirkende Komponente der Bremskraft stetig ab. Wenn der Pol im Punkt 27 angekommen ist, dann ist diese Komponente gleich Null und der sogenannte Nickausgleich beträgt 100 %. In diesem Zustand steht der restliche Federweg voll zur Verfügung. Dieser Umstand ist sehr vorteilhaft, wenn das Vorderrad im angebremsten Zustand eine Unebenheit, beispielsweise einen Bahnübergang überfährt. Durch entsprechende Wahl der Geometrie der beiden identischen Viergelenke der Vorderradführung ist der vorstehend beschriebene Nickausgleich beim Bremsen des Vorderrades nahezu beliebig einstellbar.

Da das Federbein im Lenkkopf konzentrisch zur Lenkdrehachse angeordnet ist, sind die einem Verdrehen des Lenkers entgegenwirkenden Trägheitskräfte sehr klein.

An der Oberseite des oberen Lenkers 16 befindet sich ein Handrad 28, mit dem sich die Charakteristik, d. h. die Härte des Federbeins einstellen läßt. Unter einem Federbein im Sinne der vorstehenden Beschreibung ist ein zentrales Führungselement mit linearer Führungsfunktion zu verstehen

In Fig. 2 der Zeichnung ist eine abgewandelte, nicht erfindungsgemäße, Ausführungsform einer Vorderradführung gezeigt. Der obere Teil der Vorderradführung mit oberem Lenker und Federbein im Steuerkopf entspricht der in Fig. 1 gezeigten und vorstehend beschriebenen ersten Ausführungsform. Davon abweichend hat die zweite Ausführungsform jedoch keine unteren Lenker, sondern zwei Führungen 30 in den Gabelholmen 10. Am Radträger 32 sind zwei Gleitstücke 31 befestigt, die in den Führungen 30 gleiten. Die beiden Gleitstücke 31 sind zur Verringerung der Reibung mit einer Lauffläche aus Kunststoff versehen. Die Form der Führungen 30 kann frei gewählt werden, womit die Kinematik fast beliebig ausgelegt werden kann. Der Pol muß sich daher nicht zwingend auf einer Kreisbahn bewegen.

Die Führungen 30 sind so ausgeführt, daß die Gleitstücke 31 einen seitlichen Formschluß haben und somit die Seitenkraft abstützen können. Die Führung 30 ist mit einem Faltenbalg zwischen Gabelholm 10 und Radträger 32 abgedichtet. Der bzw. die Bremssättel 29 sind wie bei der ersten Ausführungsform am Radträger 32 befestigt.

Für ein gutes Ansprechverhalten ist ein Ersatz der Gleitstücke 31 durch Wälzlager zu bevorzugen, die in den Führungen 30 abrollen. Diese Wälzlager können vorgespannt werden, um Spielfreiheit zu erreichen.

Eine (nicht gezeigte) mögliche Abwandlung der Ausführungsform nach Fig. 2 besteht darin, die Führungen am Radträger vorzusehen und die Gleitstücke bzw. Wälzlager an den Gabelholmen anzubringen. Eine derartige kinematische Umkehr kann je nach Ausführung Vorteile hinsichtlich des Bauraumes erbringen.

### Bezugszeichenliste:

- 10: Gabelholme
- 11: obere Gabelbrücke
- 12: untere Gabelbrücke
- 13: Vorderrahmen
- 14: Lenkkopf
- 15: Vorderrad
- 16: oberer Lenker
- 17: unterer Lenker
- 18: Koppeln (Radträger)
- 19: Achse des Viergelenks
- 20: Achse des Viergelenks
- 21: Achse des Viergeienks
- 22: Achse des Viergelenks
- 23: Steckachse
- 24: Stange des Federbeins
- 25: Pol im Normalzustand
- 26: Pol im ausgefederten Zustand
- 27: Pol im eingefederten Zustand
- 28: Handrad
- 29: Bremssattel
- 30: Führungen
- 31: Gleitstücke bzw. Wälzlager
- 32: Radträger

## Patentansprüche

1. Führung für das Vorderrad (15) eines Motorrades, umfassend eine Gabel mit zwei Holmen (10), die durch eine obere und eine untere Gabelbrücke (11,12) miteinander verbunden sind, einen am Vorderrahmen (13) befestigten Lenkkopf (14), mit dem die obere und die untere Gabelbrücke drehbar verbunden sind, einen oberen und zwei untere Lenker (16,17), deren vordere Enden mit den Gabelholmen (10) schwenkbar verbunden sind, zwei mit den hinteren Enden des oberen und der beiden unteren Lenker (16,17) schwenkbar verbundene Koppeln (18), die als Radträger ausgebildet sind, wobei die Lenker und die Koppeln zwei deckungsgleiche Viergelenke bilden, und ein Federbein, das sich an einem der Lenker und an der oberen Gabelbrücke (11) abstützt, **dadurch gekennzeichnet, dass** die oberen und die unteren Lenker (16, 17) zu den Gabelholmen (10) näherungsweise rechtwinklig angeordnet sind, und dass das Federbein im Lenkkopf (14) konzentrisch zur Lenkdrehachse angeordnet ist und sich am oberen Lenker (16) abstützt.

2. Führung nach Anspruch 1, **dadurch gekennzeichnet, dass** das Gehäuse des Federbeins im Lenkkopf (14) angebracht ist, und dass die Stange (24) des Federbeins mit dem oberen Lenker (16) gelenkig verbunden ist.

3. Führung nach Anspruch 1 oder 2, **dadurch gekennzeichnet, dass** die den Achsen (19 - 22) der beiden Viergelenke zugeordneten Lager als Wälzlager ausgebildet sind.

## Claims

1. A guide for the front wheel (15) of a motor cycle, comprising a fork with two fork members (10), which are connected to one another by an upper and a lower fork bridge (11, 12), a steering head (14) fastened to the front frame (13), with which the upper and the lower fork bridge are rotatably connected, an upper and two lower links (16, 17), the front ends of which are pivotably connected to the fork members (10), two connecting rods (18) pivotably connected to the rear ends of the upper and the two lower links (16, 17), which are configured as wheel mounts, the links and the connecting rods forming two congruent four-bar link mechanisms and a suspension strut, which is supported on one of the links and on the upper fork bridge (11), **characterised in that** the upper and the lower links (16, 17) are arranged approximately at right angles to the fork members (10), and **in that** the suspension strut is arranged in the steering head (14) concentrically to the steering axis of rotation and is supported on the upper link (16).

2. A guide according to claim 1, **characterised in that** the housing of the suspension strut is attached in the steering head (14) and **in that** the rod (24) of the suspension strut is connected in an articulated manner to the upper link (16).

3. A guide according to claim 1 or 2, **characterised in that** the bearings associated with the axles (19 to 22) of the two four-bar link mechanisms are configured as roller bearings.

## Revendications

1. Guidage de la roue avant (15) d'une motocyclette comprenant :
- une fourche avec deux branches (10) reliées entre elles par un pont supérieur et un pont inférieur de fourche (11, 12),
- une tête de direction (14) fixée au cadre avant (13) et à laquelle sont reliés en rotation les ponts de fourche,
- un bras supérieur et deux bras inférieurs (16, 17) dont des extrémités avant sont reliées en basculement aux branches de fourche (10),
- deux bielles (18), reliées en basculement aux extrémités arrière du bras supérieur et des deux bras inférieurs (16, 17), et constituées en tant que supports de roue, les bras et les bielles formant deux parallélogrammes articulés identiques,
- une jambe élastique qui s'appuie sur un des bras et sur le pont supérieur de fourche (11),
**caractérisé en ce que**
les bras supérieur et inférieur (16, 17) sont disposés à peu près perpendiculairement aux branches de fourche (10) et la jambe élastique est dans la tête de direction (14) concentrique à l'axe de rotation de direction et en appui sur le bras supérieur (16).

2. Guidage selon la revendication 1,
**caractérisé en ce que**
le boîtier de la jambe élastique est monté dans la tête de direction (14) et la tige (24) de la jambe élastique est articulée au bras supérieur (16).

3. Guidage selon la revendication 1 ou 2,
**caractérisé en ce que**
les paliers associés aux axes (19 - 22) des deux parallélogrammes articulés sont des roulements à rouleaux.
